# EUROPEAN PATENT APPLICATION

(11) **EP 4 538 152 A1**
(43) Date of publication of application: **16.04.2025**
(21) Application number: 23202818.3
(22) Date of filing: 10.10.2023
(51) Int. Cl.: B62D 33/06

(54) **FRONT STRUCTURE FOR A CABIN OF AN INDUSTRIAL VEHICLE**

(71) Applicant: VOLVO TRUCK CORPORATION, 405 08 Göteborg (SE)
(72) Inventor: Uday, Patil, 416551 Kolhapur (IN); Hegde, Gangubai, 560097 BANGALORE (IN); Bharait, Shamanaik, 577548 KADUR (IN)
(74) Representative: Lavoix

(57) **Abstract**

The disclosure relates to front structure (50) for a cabin (70) of an industrial vehicle (100), comprising :
- an reinforcement structure (1) configured for being fixed to a firewall panel (60) of the cabin (70),
- a cross member (2) configured for being fixed to the reinforcement structure (1) and for overlapping the reinforcement structure (1),
- a fixing element (3) configured for fixing the reinforcement structure (1) to a structural beam (45) of the cabin (70), the structural beam (45) extending in a longitudinal direction (X) of the cabin (70).

## Description

### Technical Field

This disclosure relates to a front structure for the cabin of an industrial vehicle, in particular a cab-over truck.

### Background Art

One of the goals of the continuous development of new generations of industrial vehicles is to increase the active and passive safety of these vehicles. For ensuring driver safety in case of crash, the deformation of the structure of the cabin should be limited to a maximum acceptable amplitude. Some regulations such as Euro NCAP require a maximum cabin intrusion as a result of the crash test procedure. For facilitating the interactions with the other road users and contributing to their safety, the blind spots experienced by the driver should be avoided or at least limited. Improving the visibility of possible obstacles located near ground level right in front of the truck is targeted.

Furthermore, aerodynamic drag reduction is a constant objective for vehicle development, in order to reduce the energy consumption of the vehicle. Weight reduction is also a constant target.

The design of the cabin may be affected by each of these different requirements. In particular, the front structure of the cabin has a particular influence on crash resistance capability, on the possibility of direct view in front of the truck, and on the drag resistance of the truck.

Meeting these conflicting goals induce changes in the design of the structure of the cabin of the industrial vehicle, in particular its front structure.

### Summary

To this end, it is proposed a front structure for a cabin of an industrial vehicle, comprising :
- an reinforcement structure configured for being fixed to a firewall panel of the cabin,
- a cross member configured for being fixed to the reinforcement structure and for overlapping the reinforcement structure,
- a fixing element configured for fixing the reinforcement structure to a structural beam of the cabin, the structural beam extending in a longitudinal direction of the cabin.

In case of crash, the reinforcement structure transmits forces to the main structure of the cabin, including the longitudinal structural beams of the cabin. Furthermore, the deformation of the cross member contributes to dissipate energy and mitigate the effect of the crash. Cabin intrusion can be limited and energy dissipation can be enhanced.

The following features can optionally be implemented, separately or in combination one with the others:
According to an aspect of the disclosure, the reinforcement structure provides load paths in the event of a crash.

The front structure extends in a transverse direction of the cabin.

The front structure extends in a vertical direction of the cabin.

The cross member may define a supporting member for a bottom edge of a cabin windshield.

In an example, the reinforcement structure is configured for linking a first A-pillar of the cabin to a second A-pillar of the cabin.

The structural beam can extend under a floor of the cabin.

Optionally in some examples, including in at least one preferred example of the front structure, the reinforcement structure comprises:
- an upper member,
- a lower member,
- a connecting member linking the upper member and the lower member.

The protection ensured by the front structure is spread between the different members.

The upper member and the lower member may extend in the transverse direction of the cabin.

The upper member and the lower member may be substantially parallel to each other.

The connecting member can comprise two intermediate links.

A first intermediate link can extend along a first axis.

A second intermediate link can extend along a second axis.

The two intermediate links may form an angle comprised between 60° and 90° with the upper member.

Optionally in some examples, including in at least one preferred example, the cabin comprises two A-pillars, and the reinforcement structure is configured for being welded to the first A-pillar of the cabin and to the second A-pillar of the cabin.

The front structure associated with the A-pillars provide a high stiffness to the front of the cabin, able to resist intrusion in the event of a front crash.

More precisely, the upper member of the reinforcement structure can be configured for being welded to both A-pillars of the cabin.

The lower member of the reinforcement structure can be configured for being welded to both A-pillars of the cabin.

Optionally in some examples, including in at least one preferred example of the front structure, the reinforcement structure is a single metal stamped element.

No assembly is necessary to obtain the reinforcement structure. The time of assembly of the cabin can thus be reduced. Furthermore, the mechanical integrity of the front structure may be enhanced compared to structures made of numerous assembled parts.

The reinforcement structure can be formed from a single metal sheet.

The thickness of the reinforcement structure may be comprised between 1,5 millimeter and 2,0 millimeters.

In other words, the upper member of the reinforcement structure can be integral with the connecting member.

The lower member of the reinforcement structure can be integral with the connecting member.

The upper member of the reinforcement structure, the lower member of the reinforcement structure and the connecting member of the reinforcement structure can be integral together.

Optionally in some examples, including in at least one preferred example of the front structure, the upper member of the reinforcement structure comprises two flat portions linked by a linking portion having a substantially U-shaped profile.

This geometry provides both a high stiffness of the upper member itself and the possibility of creating a strong assembly of the upper member with other structural elements, such as the firewall.

The U-shaped profile of the linking portion can comprise two substantially parallel wings connected by a base extending transversally to the wings.

The two flat portions of the upper member of the reinforcement structure can extend in a vertical plane.

The base of the linking portion of the upper member may extend in a vertical plane parallel to the extension plane of the two flat portions of the upper member.

The linking portion of the two flat portions of the upper member can be orientated towards the front of the cabin.

Optionally in some examples, including in at least one preferred example of the front structure, the firewall panel comprises an indented portion, and the linking portion of the upper member having a substantially U-shaped profile may be configured to face the indented portion so as to form a box section.

The box section created by the association of the upper member and a portion of the firewall provides a stiff element well adapted to resist cabin intrusion in a critical area of the cabin.

The firewall panel can be formed from a metal sheet.

The thickness of the firewall panel can be comprised between 1,2 millimeter and 1,5 millimeter.

The indented portion of the firewall panel can be obtained by stamping.

The indented portion of the firewall panel may have a substantially U-shaped profile.

The indented portion can be orientated towards the rear of the cabin.

Optionally in some examples, including in at least one preferred example of the front structure, the lower member of the reinforcement structure may comprise two flat portions linked by a linking portion having a substantially U-shaped profile.

The U-shaped profile of the linking portion of the lower member can comprise two substantially parallel wings connected by a base extending transversally to the wings.

The two flat portions of the lower member of the reinforcement structure can extend in a vertical plane.

The two flat portions of the lower member of the reinforcement structure can be configured to be in contact with a flat section of the firewall panel.

The base of the linking portion of the lower member may extend in a vertical plane parallel to the extension plane of the two flat portions of the upper member.

The linking portion of the two flat portions of the lower member can be orientated towards the front of the cabin.

The base of the linking portion of the lower member can be configured to face a flat section of the firewall panel.

Each intermediate link of the connecting member of the reinforcement structure can comprise two flat portions linked by a linking portion having a substantially U-shaped profile.

The two flat portions of each intermediate link of the connecting member of the reinforcement structure can be configured to be in contact with a flat section of the firewall panel.

Optionally in some examples, including in at least one preferred example of the front structure, the cross member is a metal stamped element.

The thickness of the cross member can be comprised between 1,5 millimeter and 2,0 millimeters.

Optionally in some examples, including in at least one preferred example of the front structure, the upper member of the reinforcement structure can be disposed in an internal cavity defined by the cross member.

The association of different members forming several box sections fitted in one another may provide high stiffness and high energy dissipation, by associating the adequate shapes and materials.

The cross member can be configured for being welded to the upper member of the reinforcement structure.

The cross member, the upper member of the reinforcement structure and the firewall panel can be configured for being welded together.

Optionally in some examples, including in at least one preferred example, the cross member may comprise:
- a first portion with a cross-section comprising a L-shaped portion and
- a second portion with a cross-section comprising a U-shaped portion, the second portion comprising two side wings linked by a transverse base.

A first side wing of the second portion can be fixed to the first portion. A second side wing of the second portion can be fixed to the upper member of the reinforcement structure.

The second side wing of the second portion, the upper member of the reinforcement structure and the firewall panel can be locally superposed and fixed together.

The second wing of the second portion, the upper member of the reinforcement structure and the firewall panel can be locally superposed and fixed together, for example by a series of spot welds.

The cross member can comprise legs extending transversally from a main axis of the cross member. The legs can be configured for overlapping the connecting member of the reinforcement structure.

Optionally in some examples, including in at least one preferred example of the front structure, the fixing element may comprise a load transfer element and a fixing bracket.

The load transfer element of the fixing element can be a stamped metal part.

Optionally in some examples, including in at least one preferred example of the front structure, the fixing bracket of the fixing element is a cast metal part.

A cast bracket can provide a high stiffness and resistance, thanks to the range of achievable wall thickness.

The fixing bracket can be configured for being fixed to the reinforcement structure of the cabin.

The fixing bracket can be configured for being bolted to the reinforcement structure of the cabin.

The fixing bracket can be configured for overlapping a junction zone between an intermediate link of the connecting member and the lower member.

The fixing bracket is configured for being fixed to the structural beam of the cabin.

Optionally in some examples, including in at least one preferred example of the front structure, the fixing bracket can be configured for being bolted to the structural beam of the cabin.

The reinforcement structure can be pressed between the fixing element and the structural beam of the cabin.

Optionally in some examples, including in at least one preferred example of the front structure, a first fixing bolt may extend through the fixing bracket and the reinforcement structure.

The first fixing bolt may be distant from the structural beam of the cabin.

The reinforcement structure may comprise a captive nut configured for receiving the first fixing bolt.

The fixing bracket may comprise through holes for fixing bolts.

Optionally in some examples, including in at least one preferred example of the front structure, a second fixing bolt may extend through the fixing bracket, the reinforcement structure, the load transfer element and a flange of the structural beam of the cabin.

The flange of the structural beam of the cabin may comprise a captive nut configured for receiving the second fixing bolt.

A third fixing bolt may extend through the fixing bracket, the load transfer element and the flange of the structural beam of the cabin.

The first fixing bolt, the second fixing bolt and the third fixing bolt may extend along parallel directions.

The first fixing bolt, the second fixing bolt and the third fixing bolt may extend along a longitudinal direction of the cabin.

The disclosure also relates to a cabin comprising a front structure as described precedingly, in which:
- the reinforcement structure is fixed to a firewall panel of the cabin,
- the cross member is fixed to the reinforcement structure and overlaps the reinforcement structure,
- the fixing element fixes the reinforcement structure to a structural beam of the cabin.

The disclosure relates as well to a truck comprising a frame and a cabin as described above, in which the cabin is fixed to the frame of the of the truck.

According to a second aspect of the disclosure, an assembly process of a cabin of an industrial vehicle may comprise:
- providing a cabin comprising A-pillars,
- providing a front structure as described earlier,
- welding the reinforcement structure to the A-pillars of the cabin,
- welding the cross member to the reinforcement structure,
- fixing the reinforcement structure to a structural beam of the cabin.

Optionally in some examples, including in at least one preferred example of the assembly process, fixing the reinforcement structure to a structural beam of the cabin may comprise:
- welding a load transfer element to the reinforcement structure,
- bolting a fixing bracket to the structural beam of the cabin.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### Brief Description of Drawings

Other features, details and advantages will be illustrated in the following detailed description and on the appended drawings, on which:
- Figure 1 is a schematic side view of a truck equipped with a front structure according to the disclosure,
- Figure 2 is a perspective view of a truck cabin comprising a front structure according to the disclosure,
- Figure 3 is a perspective exploded view of a front structure according to the disclosure,
- Figure 4 is a detailed view of a first element of the front structure of figure 3,
- Figure 5 is another detailed view of a second element of the front structure of figure 3,
- Figure 6 is another detailed view of a third element of the front structure of figure 3,
- Figure 7 is a side cross section of the front structure of figure 2,
- Figure 8 represents other views of the cabin of figure 2.

### Description of Embodiments

In order to make the figures easier to read, the various elements are not necessarily represented to scale. In these figures, identical elements receive the same reference number. Certain elements or parameters can be indexed, that is to say designated for example by 'first element' or second element, or first parameter and second parameter, etc. The purpose of this indexing is to differentiate elements or parameters that are similar, but not identical. This indexing does not imply a priority of one element, or one parameter over another, and their names can be interchanged. When it is mentioned that a subsystem comprises a given element, the presence of other elements in this subsystem is not excluded.

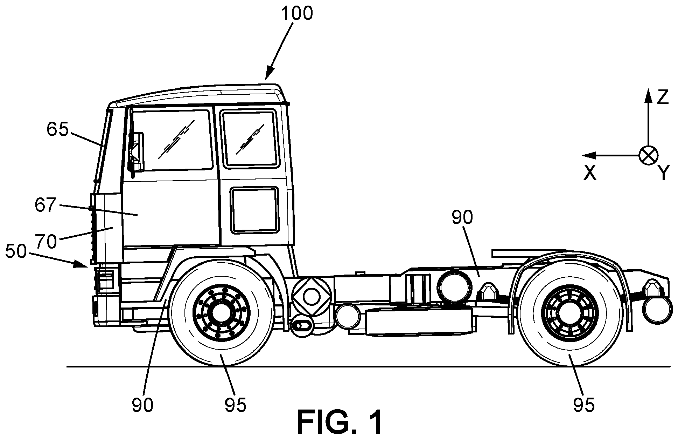

Figure 1 illustrates a truck 100. This truck 100 is a cab-over truck, which means the nose of the truck is flat and its cabin stands above the engine of the truck.

The truck 100 comprises a frame 90. The cabin 70 is fixed to the frame 90 of the truck 100. Doors 67 provides access to the inside of the cabin 70 to the driver and passengers, with one door on each side of the cabin 70.

The frame 90 comprises two main beams, extending parallelly together along the longitudinal direction X of the truck. The two main beams are cross linked by several members extending in the transversal direction Y, to provide adequate stiffness.

The frame 90 receives the powertrain, not represented, of the truck 100, and at least two axles 95. The axles 95 are fixed to the frame 90 through suspension elements, including springs such as leaf or air springs, damping elements, and linkages guiding the possible movements of the axles relatively to the frame.

The cabin 70 is fixed over the frame 90. Springs allow vertical deflection of the cabin 70 relatively to the frame 90.

The cabin 70 may be tilted relatively to the frame 90, for example for engine maintenance operations.

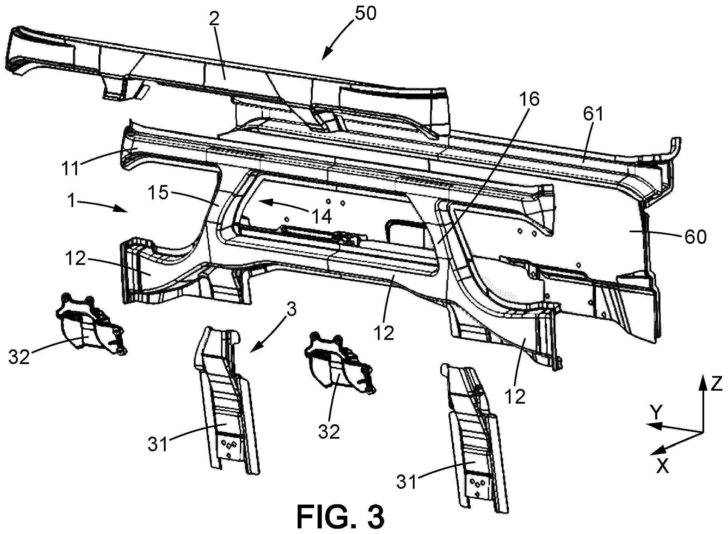

Figure 3 illustrates an embodiment of the proposed front structure 50 for a cabin 70 of an industrial vehicle 100, in an exploded view showing the different elements separated from each other.

The proposed front structure 50 comprises :
- a reinforcement structure 1 configured for being fixed to a firewall panel 60 of the cabin 70,
- a cross member 2 configured for being fixed to the reinforcement structure 1 and for overlapping the reinforcement structure 1,
- a fixing element 3 configured for fixing the reinforcement structure 1 to a structural beam 45 of the cabin 70, the structural beam 45 extending in a longitudinal direction X of the cabin 70.

In case of crash, particularly a front crash, the reinforcement structure 1 transmits loads resulting from the crash to the main structure of the cabin 70, including the longitudinal structural beams 45 of the cabin 70. Furthermore, the deformation of the cross member 2 contributes to dissipate energy and mitigate the effect of the crash. Cabin intrusion can be limited, and energy dissipation can be enhanced. The proposed structure offers a high level of safety, together with an efficient assembly, due to the low number of individual parts. Due to high level of mechanical integrity proposed by the proposed front structure, the front part of the cabin can be made narrower, giving the cabin a profiled shape that reduces drag resistance and favors fuel economy improvement.

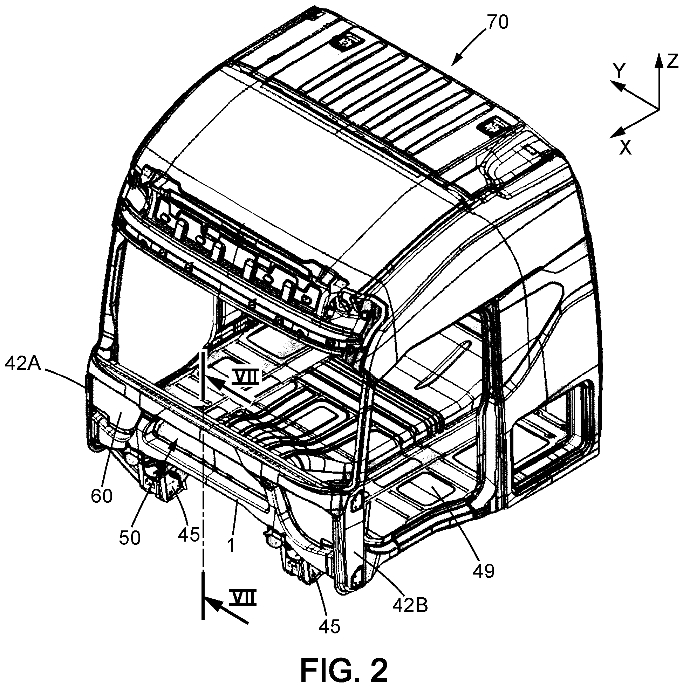

Figure 2 illustrates the complete body-in-white structure of a cabin 70. Outside panels, doors and glass panels are not represented. The cabin comprises two structural beams 45 extending in a longitudinal direction. Each structural beam 45 is located along the transverse direction Y about halfway between the longitudinal axis of the cabin and the external pillars defining the lateral sides of the cabin. The two structural beams 45 are parallel.

The cabin 70 comprises a front structure 50 in which:
- the reinforcement structure 1 is fixed to a firewall panel 60 of the cabin 70,
- the cross member 2 is fixed to the reinforcement structure 1 and overlaps the reinforcement structure 1,
- the fixing element 3 fixes the reinforcement structure 1 to a structural beam 45 of the cabin 70.

The reinforcement structure 1 provides load paths in the event of a crash.

In other words, the mechanical loads resulting from a front impact are distributed within the reinforcement structure 1 itself, and are also transferred to the vertical pillars and to longitudinal structural beams of the cabin 70.

As illustrated on figure 2, the front structure 50 extends in a transverse direction Y of the cabin 70.

The front structure 50 extends in a vertical direction Z of the cabin 70.

The reinforcement structure 1 is configured for linking a first A-pillar 42A of the cabin 70 to a second A-pillar 42B of the cabin 70.

The wording "A-pillar" here means a vertical beam supporting the windshield. This pillar also supports the hinges of the cabin door 67.

The structural beam 45 extends under a floor 49 of the cabin 50.

The different components of the front structure 50 will now be described.

These are represented separated from each other on figure 3.

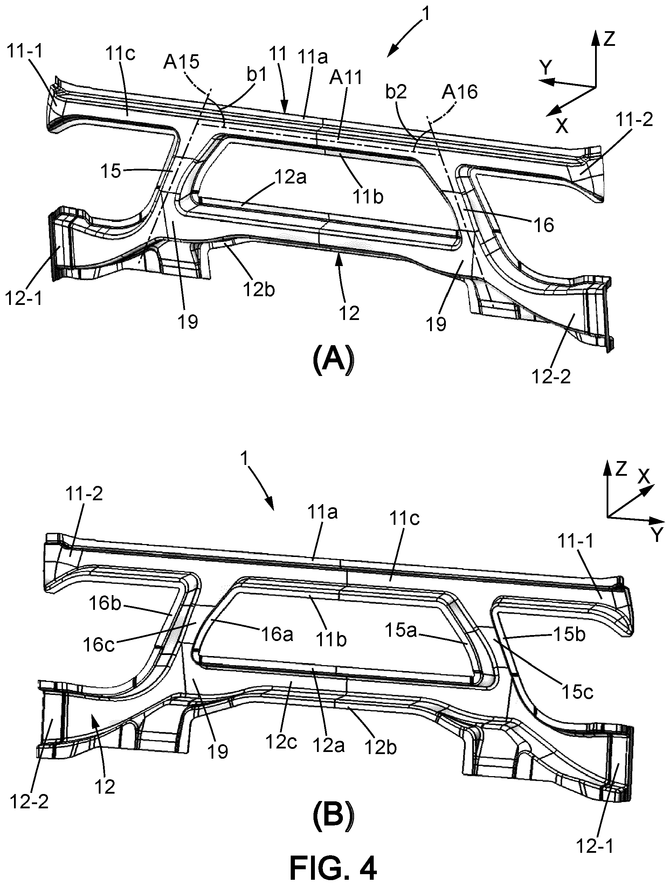

Figure 4 represents the reinforcement structure 1 isolated from the other components of the front structure 50.

Part A of figure 4 and part B of figure 4 illustrate the reinforcement structure 1 from opposite viewing directions.

On the illustrated example, the reinforcement structure 1 comprises:
- an upper member 11,
- a lower member 12,
- a connecting member 14 linking the upper member 11 and the lower member 12.

The impact forces to be experienced by the front structure 50 in the event of a crash is spread notably between the different members of the reinforcement structure 1.

The upper member 11 and the lower member 12 extend in the transverse direction Y of the cabin 70.

The upper member 11 and the lower member 12 may be substantially parallel to each other.

The connecting member 14 comprises two intermediate links 15, 16.

A first intermediate link 15 extends along a first axis A15.

A second intermediate link 16 extends along a second axis A16.

The two intermediate links 15, 16 form an angle comprised between 60° and 90° with the upper member 11.

The extension axis A11 of the upper member 11 and the extension axis A15 make an angle b1 comprised between 60°and 90°. The extension axis A11 of the upper member 11 and the extension axis A16 make an angle b2 comprised between 60°and 90°.

The extension axis A15 of the first intermediate link 15 and the extension axis A16 of the second intermediate link 16 intersect. The intersection point, not represented, is located above the upper member 11 along the vertical axis Z.

The reinforcement structure 1 is here symmetrical relatively to a median vertical plane parallel to the plan defined by the vertical axis Z and the longitudinal axis X.

The cabin 70 comprises two A-pillars 42A, 42B, and the reinforcement structure 1 is configured for being welded to the first A-pillar 42A of the cabin 50 and to the second A-pillar 42A of the cabin 70.

The front structure 50 associated with the A-pillars 42A, 42B provide a high stiffness to the front of the cabin 70, able to resist intrusion in the event of a front crash.

More precisely, the upper member 11 of the reinforcement structure 1 is configured for being welded to both A-pillars 42A, 42B of the cabin 70.

For this, a first end 11-1 of the upper member 11 of the reinforcement structure 1 is configured for being welded to a top section of the first A-pillar 42A of the cabin 70.

A second end 11-2 of the upper member 11 of the reinforcement structure 1 is configured for being welded to a top section of the second A-pillar 42B of the cabin 70.

The lower member 12 of the reinforcement structure 1 is configured for being welded to both A-pillars 42A, 42B of the cabin 70.

Similarly, a first end 12-1 of the lower member 12 of the reinforcement structure 1 is configured for being welded to a bottom section of the first A-pillar 42A of the cabin 70. A second end 12-2 of the lower member 12 of the reinforcement structure 1 is configured for being welded to a bottom section of the second A-pillar 42B of the cabin 70.

Welding process may be spot welding. Other welding processes can also be used, such as MIG welding (for "Metal Inert Gas") or laser welding.

Preferably, the reinforcement structure 1 is a single metal stamped element.

The reinforcement structure 1 can be formed for example from a hot stamped boron steel element, for example from VSMP 1400B steel family, also referenced 20MnB5 under European standard EN 10083-3.

Preferably, the reinforcement structure 1 is formed from a single metal sheet.

The thickness of the reinforcement structure 1 may be comprised between 1,5 millimeter and 2,0 millimeters.

No assembly is necessary to obtain the reinforcement structure 1, since it is a single block part. The manufacture of the reinforcement structure 1 is made easier. Furthermore, the time of assembly of the cabin itself can be reduced. Furthermore, the mechanical integrity of the front structure 50 may be enhanced compared to structures made of numerous assembled parts.

The upper member 11 of the reinforcement structure 1 is integral with the connecting member 14.

The lower member 12 of the reinforcement structure 1 is also integral with the connecting member 14.

The upper member 11 of the reinforcement structure 1, the lower member 12 of the reinforcement structure 1 and the connecting member 14 of the reinforcement structure 1 can be integral together.

Part A of figure 4 and part B of figure 4 illustrate the reinforcement structure 1 from opposite viewing directions, putting into evidence the shape of a section of the reinforcement structure 1.

The upper member 11 of the reinforcement structure 1 comprises two flat portions 11a, 11b linked by a linking portion 11c having a substantially U-shaped profile.

The two flat portions 11a, 11b extend in the same plane.

This geometry provides both a high stiffness of the upper member 11 itself and the possibility of creating a strong assembly of the upper member 11 with other structural elements, such as the firewall 60.

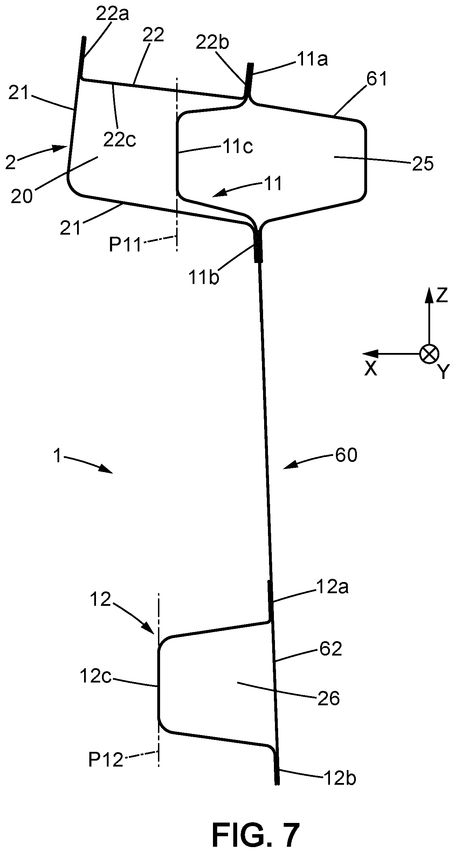

The shape of a cross section of the reinforcement structure 1 is represented on figure 7.

The U-shaped profile of the linking portion 11c can comprise two substantially parallel wings connected by a base extending transversally to the wings.

The two flat portions 11a, 11b of the upper member 11 of the reinforcement structure 1 can extend in a vertical plane.

The base of the linking portion 11c of the upper member 11 extends in a vertical plane P11 parallel to the extension plane of the two flat portions 11a, 11b of the upper member 11.

The linking portion 11c of the two flat portions 11a, 11b of the upper member 11 can be orientated towards the front of the cabin.

The extension directions and orientation directions are defined in the normal installation position of the elements, when the different elements are properly assembled in as-new condition, therefore free of unintended deformation.

As illustrated on figure 7, the firewall panel 60 comprises an indented portion 61, and the linking portion 11c of the upper member 11 having a substantially U-shaped profile is configured to face the indented portion 61 so as to form a box section.

The box section created by the association of the upper member 11 and a portion 61 of the firewall 60 provides a stiff element well adapted to resist cabin intrusion in a critical area of the cabin 70.

The firewall panel 60 can be formed from a metal sheet.

The thickness of the firewall panel 60 can be comprised between 1,2 millimeter and 1,5 millimeter.

The firewall panel 60 can be formed for example from a cold rolled steel element, for example from VSCR260Y steel, also referenced HC260Y under EN10268 standard.

The indented portion 61 of the firewall panel 60 can be obtained by stamping.

The indented portion 61 of the firewall panel 60 may have a substantially U-shaped profile. The indented portion 61 is orientated towards the rear of the cabin 70.

The two flat portions 11a, 11b are in contact with corresponding flat portions of the firewall extending on both sides of the indented portion 61.

The upper member 11 may be fixed to the firewall 60 by spot welds disposed on these overlapping flat portions.

Once the upper member 11 is assembled to the firewall panel 60, the upper member 11 and the firewall panel 60 define a first closed volume 25 having a shape similar to a box section.

This area provides a high resistance zone that limits the intrusion in the cabin in case of crash.

The structure of lower member 12 of the reinforcement structure 1 is similar to the structure of the upper member 11.

The lower member 12 of the reinforcement structure 1 comprises two flat portions 12a, 12b linked by a linking portion 12c having a substantially U-shaped profile.

The U-shaped profile of the linking portion 12c of the lower member 12c can comprise two substantially parallel wings connected by a base extending transversally to the wings. The two flat portions 12a, 12b of the lower member 12 of the reinforcement structure 1 extend in a vertical plane.

The two flat portions 12a, 12b of the lower member 12 of the reinforcement structure 1 are configured to be in contact with a flat section of the firewall panel 60.

The base of the linking portion 12c of the lower member 12 extends in a vertical plane P12 parallel to the extension plane P11 of the two flat portions 11a, 11b of the upper member 11.

The plane P12 is offset from the plane P11. On the illustrated example, plane P12 is closer to the foremost area of the truck 100 than plane P11.

The linking portion 12c of the two flat portions 12a, 12b of the lower member 12 is orientated towards the front of the cabin.

On the example illustrated of figure 7, the base of the linking portion 12c of the lower member 12 is configured to face a flat section 62 of the firewall panel 60.

Once the lower member 12 is assembled to the firewall panel 60, the lower member 12 and the firewall panel 60 define a second closed volume 26 having a shape similar to a box section.

The lower member 12 may be fixed to the firewall 60 by spot welds disposed on the overlapping flat portions of the lower member 12 and of the firewall 60.

In a similar way, each intermediate link 15, 16 of the connecting member 14 of the reinforcement structure 1 comprises two flat portions 15a, 15b, 16a, 16b linked by a linking portion 15c, 16c having a substantially U-shaped profile.

This structure is particularly visible on part B of figure 4.

The two flat portions 15a, 15b, 16a, 16b of each intermediate link 15, 16 of the connecting member 14 of the reinforcement structure 1 are configured to be in contact with a flat section of the firewall panel 60.

As before, each intermediate link 15, 16 of the connecting member 14 can be spot welded to the firewall 60, the spot-welds being arranged on the flat portions 15a, 15b, 16a, 16b and spaced apart from each other.

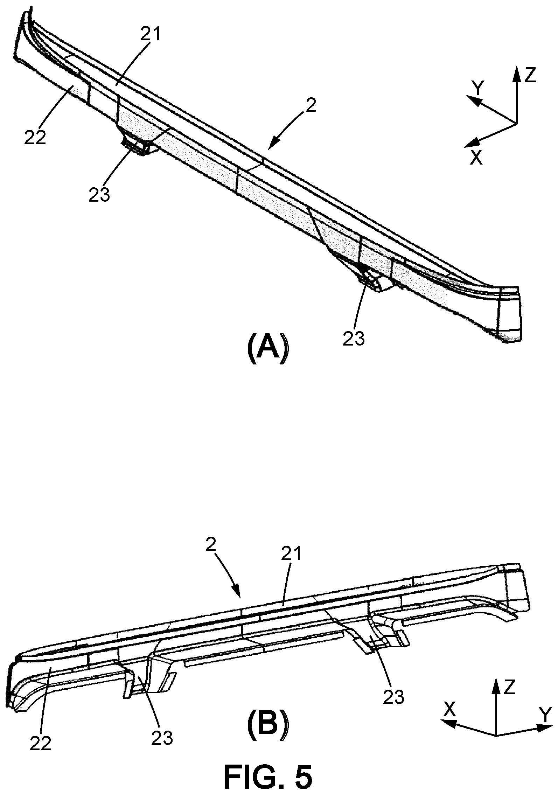

Figure 5 represents the cross member 2 isolated from each other elements of the front structure 50 of the cabin 70.

The cross member 2 defines here a supporting member for a bottom edge of a cabin windshield 65.

The cross member 2 may have a general shape of a beam.

The cross member 2 is here a metal stamped element.

More precisely, the cross member 2 is a stamped steel element, for example a cold rolled steel element, for example from VSCR140EF steel, also referenced as CR4 under ISO 3574 standard and as DC04 under EN 10130 standard.

The thickness of the cross member 2 can be comprised between 1,2 millimeter and 1,5 millimeter.

The upper member 11 of the reinforcement structure 1 can be disposed in an internal cavity 20 defined by the cross member 2.

This area defines a zone with high energy absorption, thus contributing to dissipate the crash energy.

The association of different members forming several box sections fitted in one another may provide some areas with high stiffness to resist intrusion and other areas with high energy dissipation, by associating the adequate shapes and materials.

Low cabin intrusion and high energy dissipation can be obtained thanks to the proposed structure.

The cross member 2 can be configured for being welded to the upper member 11 of the reinforcement structure 1.

More precisely, the cross member 2, the upper member 11 of the reinforcement structure 1 and the firewall panel 60 can be configured for being welded together.

The upper member 11 is sandwiched between the cross member 2 and the firewall 60. For example, spot welds assemble the three layers of metal together.

On the illustrated example, the cross member 2 comprises :
- a first portion 21 with a cross-section comprising a L-shaped portion, and
- a second portion 22 with a cross-section comprising a U-shaped portion, the second portion 22 comprising two side wings 22a, 22b linked by a transverse base 22c.

A first side wing 22a of the second portion 22 can be fixed to the first portion 21.

A second side wing 22b of the second portion 22 can be fixed to the upper member 11 of the reinforcement structure 1.

As illustrated of figure 7, a cross-section of the cross member 2 defines a U-shape, and the upper member 11 can fit in the open end of the U-shape to form a closed cross-section. This closed cross-section defines the outer surface of the closed volume 20.

The second side wing 22b of the second portion 22, the upper member 11 of the reinforcement structure 1 and the firewall panel 60 can be locally superposed and fixed together.

For example, the second side wing 22b, two flat portions 11a of the upper member 11 and the firewall panel 60 are fixed together by a series of spot-welds.

Similarly, the second wing 22b of the second portion 22, the upper member 11 of the reinforcement structure 1 and the firewall panel 60 are locally superposed and fixed together. The three layers of material are welded together, for example by a series of spot welds.

The transverse base 22c of the cross member 2 may define a supporting member for a bottom edge of the cabin windshield 46.

The cross member 2 can comprise legs 23 extending transversally from a main axis of the cross member 2. The legs 23 are configured for overlapping the connecting member 14 of the reinforcement structure 1.

More precisely, one leg 23 overlaps the upper section of the first intermediate link 15, and another leg 23 overlaps the upper section of the second intermediate link 16.

The fixing element 3 will now be described.

The fixing element 3 comprises a load transfer element 31 and a fixing bracket 32.

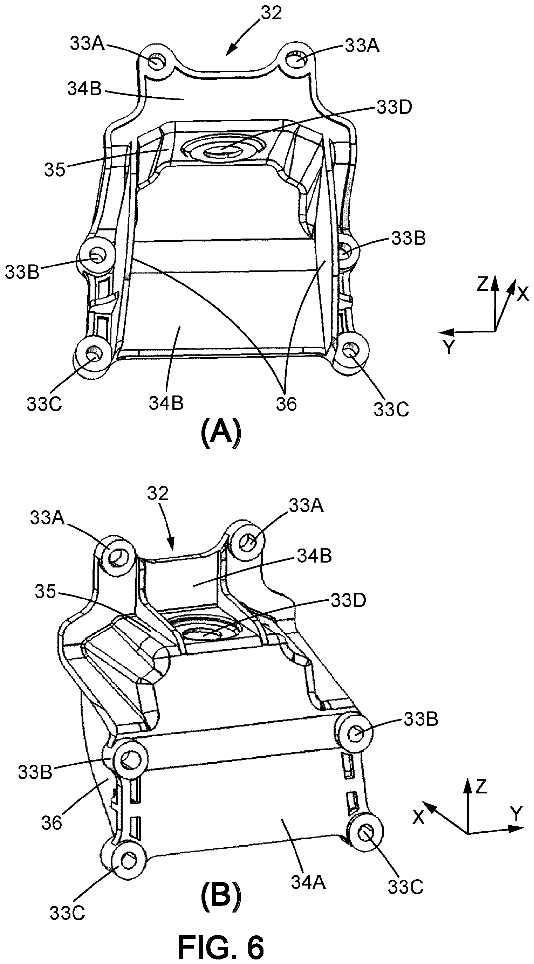

Load transfer element 31 is represented on figure 3 with the other elements of the front structure 50, and the fixing bracket 32 is represented on figure 6 as a separate element. On figure 6, viewing directions are substantially opposite to each other.

The load transfer element 31 of the fixing element 3 can be a stamped metal part.

The load transfer element 31 can be made from a hot formed or cold rolled steel element, for example from VSMP1000 or VSMP1400M, also referenced respectively HCT980X under EN 10346 standard, and 20MnB5 under EN 10083-3 standard. It can also be made for example from steel referenced DP590 under ASTM A 1079 standard.

The thickness of the load transfer element 31 is comprised between 1,5 millimeter and 2,0 millimeters.

The fixing bracket 32 of the fixing element 3 is a cast metal part.

A cast bracket can provide a high stiffness and resistance, thanks to the range of achievable wall thickness.

The fixing bracket 32 can be made from a steel or aluminum casting.

The thickness of the walls of the fixing bracket 32 is comprised between 2,5 millimeters and 3,0 millimeters.

The fixing bracket 32 is configured for being fixed to the reinforcement structure 1 of the cabin 70.

The fixing bracket 32 is here configured for being bolted to the reinforcement structure 1 of the cabin 70.

The fixing bracket 32 is configured for overlapping a junction zone 19 between an intermediate link 15, 16 of the connecting member 14 and the lower member 12.

The fixing bracket 32 is configured for being fixed to the structural beam 45 of the cabin 70.

The fixing bracket 32 is here configured for being bolted to the structural beam 45 of the cabin 70.

The reinforcement structure 1 is pressed between the fixing element 3 and the structural beam 45 of the cabin 70.

The fixing bracket 32 comprises two flat portions 34A, 34B extending in parallel planes and linked by a transverse portion 35. The two flat portions 34A, 34B extend on either side of the transverse portion 35 along a direction perpendicular to the transverse portion 35.

Reinforcing ribs 36 extending perpendicularly to both flat portions 34A, 35B and also perpendicularly to the stiffen the fixing bracket 32.

As fixing bracket is a cast part, portions 34A, 34B, transverse portion 35 and reinforcing ribs 36 are integral together.

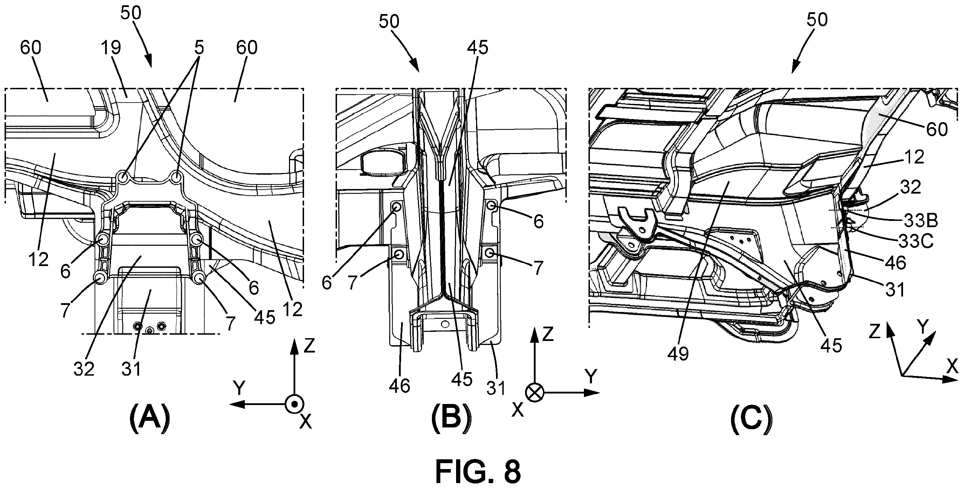

Figure 8 represents details of the front structure 50 of the cabin 70, with the different elements fixed together. Part A is a front view, part B is a rear view from under the floor of the cabin, and part C is a perspective view from under the floor of the cabin.

The fixing bracket 32 comprise through holes 33A, 33B, 33C for fixing bolts.

A first fixing bolt 5 extends through the fixing bracket 32 and the reinforcement structure 1.

The first fixing bolt 5 is distant from the structural beam 45 of the cabin 70. In other words, the first fixing bolt 5 is not in contact with the structural beam 45. The first fixing bolt 5 extends only through the fixing bracket 32 and the reinforcement structure 1.

The reinforcement structure 1 may comprise a captive nut configured for receiving the first fixing bolt 5. This captive nut is not represented.

The first fixing bolt 5 passes through hole 33A of the fixing bracket 32.

As more particularly visible on part B and part C of figure 8, a second fixing bolt 6 extends through the fixing bracket 32, the reinforcement structure 1, the load transfer element 31 and a flange 46 of the structural beam 45 of the cabin 70.

The flange 46 of the structural beam 45 of the cabin 70 may comprise a captive nut configured for receiving the second fixing bolt 6. The captive nut is not represented.

The second bolt 6 passes through hole 33B of the fixing bracket 32.

A third fixing bolt 7 extends through the fixing bracket 32, the load transfer element 31 and the flange 46 of the structural beam 45 of the cabin 70.

The third bolt 7 passes through hole 33C of the fixing bracket 32.

The third fixing bolt 7 is distant from the reinforcement structure 1. In other words, the third fixing bolt 7 doesn't pass through the reinforcement structure 1. The third fixing bolt 7 extends only through the fixing bracket 32, the load transfer element 31 and the flange 46 of the structural beam 45.

The first fixing bolt 5, the second fixing bolt 6 and the third fixing bolt 7 may extend along parallel directions.

The first fixing bolt 5, the second fixing bolt 6 and the third fixing bolt 7 extend along a longitudinal direction X of the cabin 70.

On the example detailed on figure 6, the fixing bracket 32 further comprises a through hole 34D. This hole is formed in a surface extending perpendicularly to the surfaces in which the holes 33A, 33B and 33C are formed.

A fourth fixing bolt, not represented of the figures, can mechanically link the fixing bracket 32 and the reinforcement structure 1. The direction of extension of this fourth fixing bolt is perpendicular to the direction of extension of the other fixing bolts, and reinforces the bond between the fixing bracket 32 and the reinforcement structure 1.

The fourth fixing bolt is distant from both the load transfer element 31 and the flange 46 of the structural beam 45. The fourth fixing bolt extends only through the fixing bracket 32 and the reinforcement structure 1.

The fixing brackets 32 provides a strong link between the reinforcement structure 1 and the structural beams 45 of the cabin.

In the event of a front crash, the mechanicals loads absorbed by the reinforcement structure 1 can be in part transferred to the structural beams 45.

Cabin deformation is kept to a minimum, while improved energy absorption is provided. At the same time, the lower side of the windscreen to be located low enough to improve the front view offered of the driver.

An assembly process of the cabin 70 will now be summarized.

The assembly process of a cabin 70 of an industrial vehicle 100 may comprise :
- providing a cabin 70 comprising A-pillars 42A, 42B,
- providing a front structure 50 as described earlier,
- welding the reinforcement structure 1 of the front structure 50 to the A-pillars 42A, 42B of the cabin 70,
- welding the cross member 2 of the front structure 50 to the reinforcement structure 1 of the front structure 50,
- fixing the reinforcement structure 1 to a structural beam 45 of the cabin 70.

The operation of fixing the reinforcement structure 1 to a structural beam 45 of the cabin 70 may comprise:
- welding a load transfer element 31 to the reinforcement structure 1,
- bolting a fixing bracket 32 to the structural beam 45 of the cabin 70.

The front structure 50 is provided as separate elements.

The cabin is provided with A pillars and two longitudinal structural beam 45.

The reinforcement structure is welded to the A-pillars 42A, 42B.

The cross member 2 is then welded.

The reinforcement structure 1 is then fixed to each structural beam 45.

The operation of welding the load transfer element 31 to the reinforcement structure 1 can be carried out before the reinforcement structure 1 is welded to the A-pillars of the cabin.

This assembly process is fast and efficient.

## Claims

1. Front structure (50) for a cabin (70) of an industrial vehicle (100), comprising :
- an reinforcement structure (1) configured for being fixed to a firewall panel (60) of the cabin (70),
- a cross member (2) configured for being fixed to the reinforcement structure (1) and for overlapping the reinforcement structure (1),
- a fixing element (3) configured for fixing the reinforcement structure (1) to a structural beam (45) of the cabin (70), the structural beam (45) extending in a longitudinal direction (X) of the cabin (70).

2. Front structure (50) according to claim 1, in which the reinforcement structure (1) comprises:
- an upper member (11),
- a lower member (12),
- a connecting member (14) linking the upper member (11) and the lower member (12), the connecting member (14) comprising two intermediate links (15, 16).

3. Front structure (50) according to the preceding claim, in which the upper member (11) of the reinforcement structure (1) comprises two flat portions (11a, 11b) linked by a linking portion (11c) having a substantially U-shaped profile.

4. Front structure (50) according to the preceding claim, in which the firewall panel (60) comprises an indented portion (61), and in which the linking portion (11c) of the upper member (11) having a substantially U-shaped profile is configured to face the indented portion (61) so as to form a box section.

5. Front structure (50) according to any of the preceding claims, in which the reinforcement structure (1) is a single metal stamped element.

6. Front structure (50) according to any of the preceding claims, in which the cross member (2) is a metal stamped element defining a supporting member for a bottom edge of a cabin windshield (65).

7. Front structure (50) according to any of the preceding claims in combination with claim 2,
in which the upper member (11) of the reinforcement structure (1) is disposed in an internal cavity (20) defined by the cross member (2),
and in which the cross member (2) is configured for being welded to the upper member (11) of the reinforcement structure (1).

8. Front structure (50) according to any the preceding claims, in which the fixing element (3) comprises a load transfer element (31) and a fixing bracket (32),
n which the load transfer element (31) of the fixing element (3) is a stamped metal part and in which the fixing bracket (32) of the fixing element (3) is a cast metal part.

9. Front structure (50) according to the preceding claim in combination with claim 2, in which the fixing bracket (32) is configured for being bolted to the reinforcement structure (1) of the cabin (70),
and in which the fixing bracket (32) is configured for overlapping a junction zone (19) between an intermediate link (15, 16) of the connecting member (14) and the lower member (12).

10. Front structure (50) according to claim 8 or 9, in which the fixing bracket (32) is configured for being bolted to the structural beam (45) of the cabin (70).

11. Front structure (50) according to any of claims 8 to 10, in which a first fixing bolt (5) extends through the fixing bracket (32) and the reinforcement structure (1),
in which a second fixing bolt (6) extends through the fixing bracket (32), the reinforcement structure (1), the load transfer element (31) and a flange (46) of the structural beam (45) of the cabin (70),
and in which a third fixing bolt (7) extends through the fixing bracket (32), the load transfer element (31) and the flange (46) of the structural beam (45) of the cabin (70).

12. A cabin (70) comprising a front structure (50) according to any of the preceding claims, in which :
- the reinforcement structure (1) is fixed to a firewall panel (60) of the cabin (70),
- the cross member (2) is fixed to the reinforcement structure (1) and overlaps the reinforcement structure (1),
- the fixing element (3) fixes the reinforcement structure (1) to a structural beam (45) of the cabin (70).

13. A truck (100) comprising a frame (90) and a cabin (70) according to the preceding claim, in which the cabin (70) is fixed to the frame (90) of the truck (100).

14. Assembly process of a cabin (70) of an industrial vehicle, comprising :
- providing a cabin (70) comprising A-pillars (42A, 42B),
- providing a front structure according to any of claims 1 to 12,
- welding the reinforcement structure (1) to the A-pillars (42A, 42B) of the cabin (70),
- welding the cross member (2) to the reinforcement structure (2),
- fixing the reinforcement structure (1) to a structural beam (45) of the cabin (70).

15. Assembly process according to the preceding claim, in which fixing the reinforcement structure (1) to a structural beam (45) of the cabin (70) comprises:
- welding a load transfer element (31) to the reinforcement structure (1),
- bolting a fixing bracket (32) to the structural beam (45) of the cabin (70).
